# EUROPEAN PATENT SPECIFICATION

(11) **EP 0 423 356 B1**
(45) Date of publication and mention of the grant of the patent: **30.08.1995**
(21) Application number: 90905661.6
(22) Date of filing: 29.03.1990
(51) Int. Cl.: G11B 15/02

(54) **VIDEO TAPE RECORDING SYSTEM WITH DUBBING FUNCTION AND REMOTE CONTROL TRANSMITTER THEREFOR**
VIDEOBANDAUFZEICHNUNGSSYSTEM MIT KOPIERFUNKTION UND FERNSTEUERUNGGERÄT DAFÜR
SYSTEME D'ENREGISTREMENT VIDEO AVEC DES FONCTIONS DE COPIE ET TELECOMMDANDE POUR UN TEL SYSTEME

(30) Priority: 31.03.1989 JP 80794/89
(43) Date of publication of application: 24.04.1991
(73) Proprietor: SHINTOM CO., LTD, Yokohama-Shi, Kanagawa 223 (JP)
(72) Inventor: TATEISHI, Yuko, Takatsu-ku Kawasaki-shi Kanagawa 213 (JP)
(74) Representative: Heim, Hans-Karl, Dipl.-Ing.
(86) International application number: JP9000427
(87) International publication number: WO9012396

(56) References cited:
- EP-A- 0 124 043
- EP-A- 0 286 283
- DE-A- 3 339 571
- GB-A- 2 175 124
- JP-U- 0 178 329
- JP-U- 6 391 856
- PATENT ABSTRACTS OF JAPAN, vol. 9, no. 207 (P-382)[1930], 24th August 1985;& JP-A-60 69 883 (PIONEER K.K.) 20-04-1985
- PATENT ABSTRACTS OF JAPAN, vol. 10, no. 254 (P-492)[2310], 30th August 1986;& JP-A-61 80 582 (SANYO ELECTRIC CO., LTD) 24-04-1986
- PATENT ABSTRACTS OF JAPAN, vol. 9, no. 227 (P-388)[1950], 13th September 1985;& JP-A-60 85 440 (MATSUSHITA DENKI SANGYO K.K.) 14-05-1985

## Description

### Background of the Invention

### 1. Field of the Invention:

This Invention relates to a video tape recording system according to the preamble of claim 1 and to a dubbing remote control transmitter for use in such a video tape recording system according to claim 5.

### 2. Description of the related Art:

To perform dubbing by using two video tape recorders (referred to as VTR hereinafter), both of the VTRs must start playing and recording substantially at the same time. In such a case, if these VTRs are connected only by video and audio cables, a play button and a record button of both of the VTRs have to be operated at a time. This operation is physically difficult.

From EP-A-286 283 a video tape recording system is known, comprising two video tape recorders and having a synchronous dubbing function and comprising further a video tape recorder being operated by receiving waves modulated according to an operation code so as to record images and sounds; and a remote control transmitter including buttons for transmitting various operation codes according to the operation modes of the video tape recorder.

A simple and secure operation of the two video tape recorders however is not possible.

Another system is known from JP-A-6180582 that discloses dubbing control of two video recorders by one button switch generating a sequence of commands. This system however, does not make use of a remote control.

Proposals to facilitate such operation have been made in Japanese Patent Laid-Open Publication No. 179944/1985, and Japanese Utility Model Laid-Open Publications No. 23927/1985, No. 118116/1986 and No. 193591/1986.

In those proposals, two VTRs are connected with each other by a cable for synchronized operation as well as the video and audio cables, so that when one of the VTRs is operated for recording or playing, the other VTR is simultaneously operated for recording or playing.

In this case, the users' operation is simplified. However both of the VTRs should have jacks for a special cable to receive a synchronized signal. Unfortunately connection of this special cable is very troublesome, and the cable is applicable only to the VTRs having the above described jacks. In addition, it is impossible to perform synchronous dubbing by using remote control transmitters on the market.

Japanese Utility Model Laid-Open publication No. 158624/1986 proposed a dubbing remote control switch to control the dubbing operation by using two VTRs from a remote place. The switch includes a button to operate two VTRs simultaneously for dubbing, thereby facilitating the synchronous dubbing operation from a remote place. However the switch is connected to a special jack, and is applicable only to VTRs having such a special jack.

As described above, the synchronous dubbing has been possible with only VTRs having special facilities for easy operation. No proposal has been made to facilitate the sychronous dubbing with existing VTRs which do not have any special facilities for such dubbing operation.

### Summary of the Invention

It is therefore an object of this invention to provide a video tape recording system with a simple and secure synchronous dubbing funtion and a dubbing remote control transmitter which enables the synchronous dubbing with an existing video tape recorder without any modification to it and is operable at any place because of wireless.

This object in a video tape recording system is solved according to the characterizing features of the claim 1 and in a dubbing remote control transmitter by the characterizing features of claim 5.

According to the above configuration, waves modulated according to the operation codes are outputted so as to operate the playing VTR and the recording VTR simultaneously under the wireless remote control. The playing VTR and the recording VTR have their own play/record codes. The remote control transmitter outputs the operation codes modulated according to the VTRs, so that the play code and the still code are received only by the playing VTR while the record code and the pause code are received only by the recording VTR. Even when two VTRs having the play/record functions are used as a playing VTR and a recording VTR, respectively, they can be separately operated according to the operation codes.

The dubbing set button puts the playing VTR and the recording VTR into the playing standby state and the recording standby state, respectively. The dubbing start button has both VTRs start playing and recording substantially simultaneously for the synchronous dubbing. Since the dubbing operation is started by the dubbing start button after the VTRs are under the standby state, the user can recognize that the dubbing is surely started, and does not feel uneasy about his operation.

The play code and the still code referred to here can have the playing VTR perform playing and then be put in the still state. These codes are not necessarily limited to two, and one or three or more codes can be used. The same holds true to the record code and the pause code.

The video tape recording system has the synchronous dubbing function, and is operated by waves modulated according to operation code so as to record images and sounds. The video tape recording system is operated in cooperation with the remote control transmitter described above.

When it is used as a playing VTR, a video tape recorder of the video tape recording system is operated by the play code so as to perform playing. On the other hand, when it is used as a recording VTR, the VTR is operated by the recording code so as to perform recording.

To sum up, since the video tape recorder is operated by the remote control transmitter having various function buttons, the VTR can perform the synchronous dubbing together with an existing video tape recorder which is operated by waves modulated according to different operation codes and does not have any special dubbing functions, so that the synchronous dubbing can be carried out by the wireless remote control transmitter.

### BRIEF DESCRIPTION OF THE DRAWINGS

FIG. 1 is a schematic view of a synchronous dubbing system according to the invention;
FIG. 2 is a timing chart explaining the synchronous dubbing function of the dubbing system of the invention;
FIG. 3 is a timing chart explaining operation codes and modulated waves; and
FIG. 4 shows one example of a carrier wave.

### DETAILED DESCRIPTION

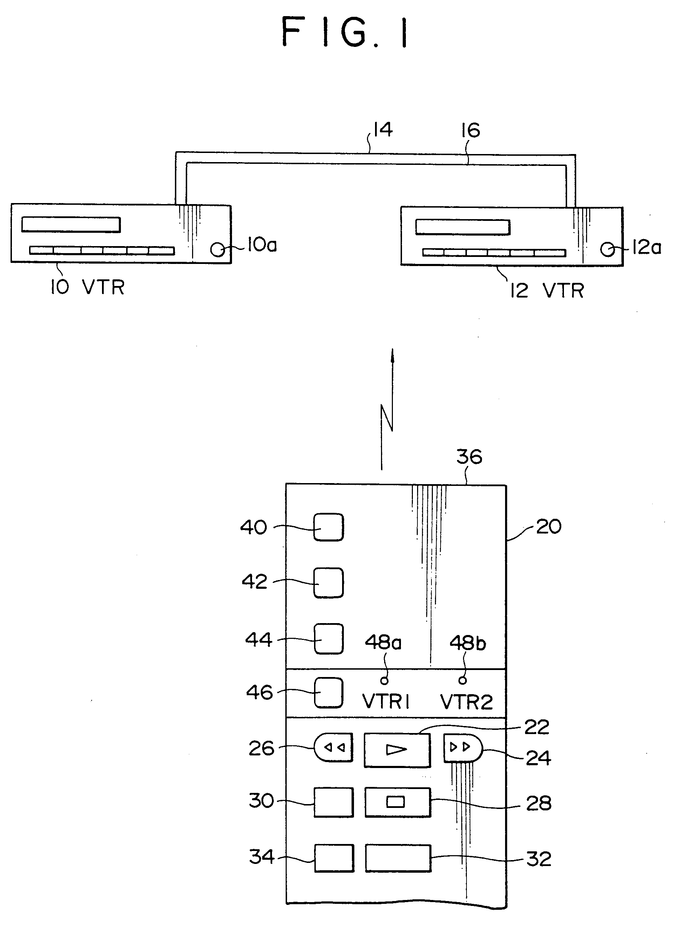

The principles of this invention are particularly useful when embodied in a video tape recording system as shown in FIG. 1. In FIG. 1, a playing VTR 10 and a recording VTR 12 are connected only by a video cable and an audio cable. Both of the VTR 10 and VTR 12 include respectively modulated wave receivers 10a and 12a for receiving modulated waves from a remote control transmitter 20, so that the VTRs can perform playing and recording. It is enough that the VTRs 10 and 12 can perform playing and/or recording. Otherwise the VTR 10 and VTR 12 may perform both playing and recording. The inevitable difference between the VTRs 10 and 12 is that the VTRs 10 and 12 have different operation codes so that the VTRs 10 and 12 are operated separately.

The remote control transmitter 20 is an accessory to the VTR 12, and is sold together with the VTR 12, for example. Therefore the remote control transmitter 20 includes various buttons for operating the VTR 12. The buttons are a play button 22, a fast forwarding (F.F) button 24, a rewind (REW) button 26, a stop button 28, a still button 30, a record (REC) button 32, and a pause button 34. The remote control transmitter 20 has a modulated wave receiver 36 on its one side.

The characteristic components of the remote control transmitter 20 are a dubbing set button 40, a dubbing start button 42, a dubbing stop button 44 and a VTR selector 46.

The dubbing set button 40 sequentially outputs modulated play code and a modulated still code to the VTR 10 serving as a video tape player (referred to as a playing VTR), and also sequentially outputs a modulated record code and a modulated pause code to the VTR 12 serving as a video tape recorder (referred to as a recording VTR). To be more specific, when the dubbing set button is depressed once, the four operation codes are modulated and transmitted one after another in the following order, i.e., the play code -still code - record code - pause code.

When the playing VTR10 and the recording VTR12 are already in the playing mode and the recording mode respectively, the operation of the dubbing set button 40 can put both VTRs in the still mode and the pause mode, respectively.

The dubbing start button 42 is for sequentially transmitting the modulated play code to the playing VTR 10, and the modulated record code to the recording VTR 12.

The dubbing stop button 44 is for sequentially transmitting the modulated stop codes to the playing VTR 10 and the recording VTR 12.

The VTR selector 46 is used not only for remote-controlling the VTR 12 which is sold together with the remote control transmitter 20 but also for remote-controlling the operation mode of the VTR 10.

The VTR 12 is made to work when the play button 22 is depressed with the VTR selector 46 operated first to turn on the indicator lamp 48a. On the other hand, the VTR 10 is caused to work when the play button 22 is depressed with the VTR selector 46 operated to turn on the indicator lap 48b.

The remote control transmitter 20 has the operation codes stored according to the operation modes of the VTR 10 and VTR 12, respectively, so that the transmitter 20 can operate both of the VTR 10 and VTR 12 having the differently modulated operation codes.

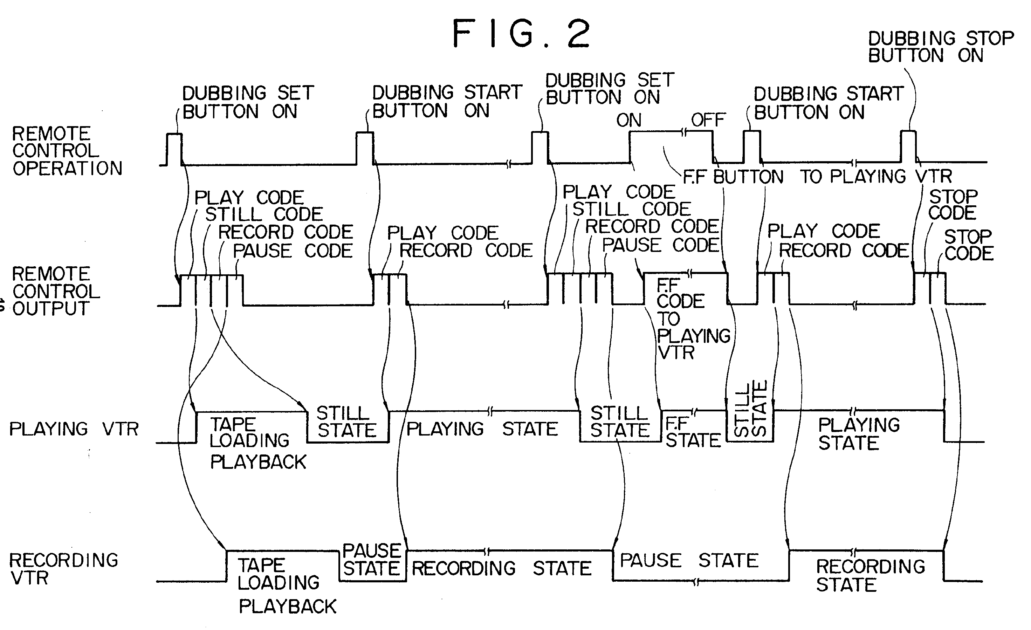

The operation of the dubbing system will be described with reference to the timing chart shown in FIG. 2.

Both of the VTR 10 and VTR 12 are turned on. The VTR 10 is loaded with a recorded video cassette while the VTR 12 is loaded with a blank video cassette.

The dubbing set button 40 is depressed on the remote control transmitter 20. Then the remote control transmitter 20 sequentially transmits the modulated play and still codes to the VTR 10, and the modulated record and pause codes to the VTR 12, as illustrated in FIG. 2.

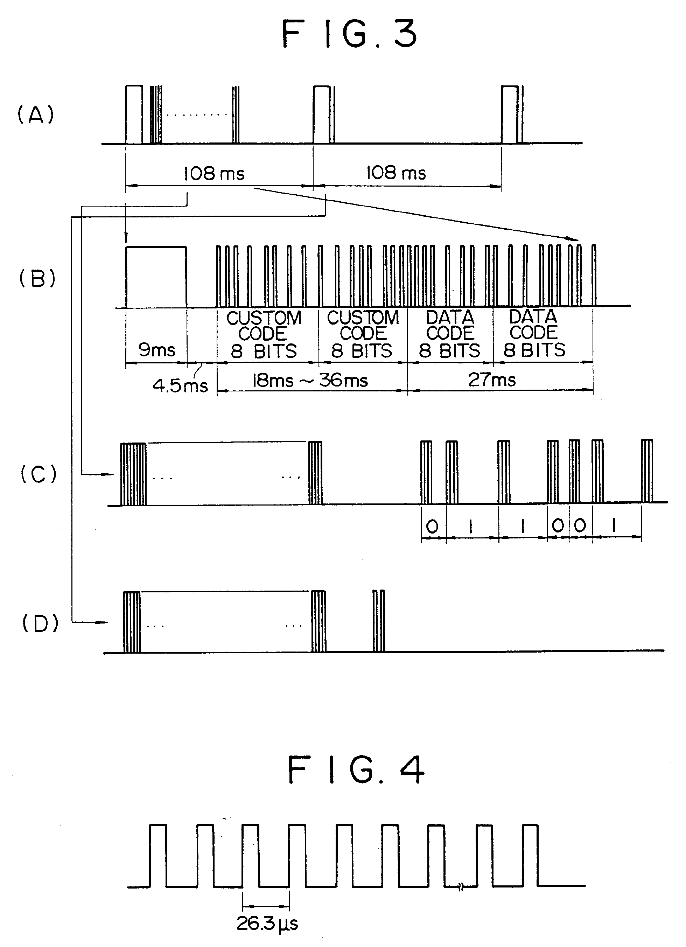

The remote control transmitter 20 outputs a carrier wave as shown in FIGS. 3 and 4. The carrier wave has a frequency of 38 kHz as illustrated in FIG. 4. The operation code which serves as a base band signal for modulating the carrier wave has pulses as shown in FIG. 3(A). The first steady depression of the dubbing set button 40 enables the pulses to be continuously outputted at 108 msec intervals. However when the dubbing set button 40 is depressed for the second and succeeding times, simplified pulses representing the continuous mode are outputted so as to save the battery power consumption of the remote control transmitter 20.

FIG. 3(B) shows the first operation code in an enlarged form. Following a 9-msec pulse, 8-bit custom codes are transmitted in pulse shape. These custom codes are for differentiating the play code and the record code.

Then 8-bit data codes are transmitted in pulse shape to indicate the playing and recording operations of the VTRs.

The fore-mentioned carrier wave is modulated by the first operation code, producing the modulated wave as shown in FIG. 3(C). The modulated wave is transmitted from the remote control transmitter 20. The second and succeeding operation codes have the carrier wave modulated as illustrated in FIG. 3(D).

Depression of the dubbing set button 40 causes the four kinds of the modulated operation codes to be outputted at 108 msec intervals.

The play code is used solely for the playing VTR 10. When receiving the play code via the modulated wave receiver 10a, the playing VTR 10 winds, around a cylinder head, a magnetic tape of the loaded cassette, and rotates the cylinder head for the necessary number of times. When the VTR 10 receives the still code during the playback operation, the VTR 10 assumes the still picture mode and is on standby immediately after completion of the playback operation.

The record code is used solely for the recording VTR 12. When receiving the record code via the modulated wave receiver 12a, the recording VTR 12 winds, around a cylinder head, a magnetic tape of the loaded blank cassette, and rotates the cylinder head for the necessary number of times. Then on receiving the pause code during the operation, the VTR 12 assumes the pause mode and is on standby after the playback operation.

Upon confirming the still mode of the VTR 10 and the pause mode of the VTR 12 following the depression of the dubbing set button 40, the operator depresses the dubbing start button 42. Then the remote control transmitter 20 sequentially transmits the modulated play code and the modulated record code, respectively, to the VTR 10 and VTR 12. Receiving the play code via the receiver 10a, the VTR 10 assumes the playing operation such as driving the cylinder head. On the other hand, when receiving the record code via the receiver 12a, the VTR 12 assumes the recording operation such as driving the cylinder head.

According to this invention, operation of the dubbing set button 40 and the dubbing start button 42 respectively causes the two VTRs 10 and 12 to start the playing and recording operations in synchronization. The play code and the record code are transmitted with a time lag from the remote control transmitter 20, thereby causing the playing operation of the VTR 10 and the recording operation of the VTR 12 to be started with the time lag. However the time lag is 108 milliseconds as described above, and is negligible in the recording operation.

It is possible to monitor, on a screen of a TV set connected to the VTR 10, the contents of the video cassette to be dubbed. For example, if it is desired to skip commercials in the video cassette loaded in the VTR 10, the dubbing set button 40 is depressed on the remote control transmitter 20. Then the modulated play code, still code, record code and pause code will be transmitted one after another. In such a case, the VTR 10 and VTR 12 continue their current operations even when they receive again the operation codes corresponding to the current operations. In other words, the VTR 10 and VTR 12 keep on playing and recording, respectively. On arrival of the succeeding still code and pause code, the VTR 10 is put in the still mode while the VTR 12 is put in the pause mode.

The VTR selector 46 of the remote control transmitter 20 is used for selecting either the VTR10 or VTR 12. When the VTR selector 46 is operated to select VTR 10 or VTR 12, the remote control transmitter 20 enables the dubbing/editing to be carried out under remote control. To fast-forward the video cassette in the VTR 10, for example, the VTR selector 46 is operated first on the remote control transmitter 20, causing the indicator lamp 48b to be lit. Then the F.F button 24 is kept depressed as illustrated in FIG. 2. Since the remote control transmitter 20 is set for the operation mode in association with the VTR 10, the modulated wave receiver 10a receives the modulated F.F code, thereby causing the fast forwarding operation to be carried out in the VTR 10.

During the fast forwarding operation, the image can be monitored on the TV set to which the VTR 10 is connected. Therefore it is possible to search for the ends of commercials. When the F.F button 24 is released, the fast forwarding operation is finished in the VTR 10. After this, the dubbing start button 42 is re-operated, the remote control transmitter 20 sequentially transmits the play code and the record code to put the VTR 10 under the play mode and the VTR 12 under the record mode. As described so far, one remote control transmitter 20 allows the editing operation to be carried during the dubbing operation.

The dubbing stop button 44 is operated when the end of dubbing is confirmed by monitoring the TV connected to the VTR 10. Then the remote control transmitter 20 sequentially sends the stop codes which are respectively specific to the VTR 10 and VTR 12, causing the VTR 10 and VTR 12 to stop operating.

While an embodiment has been described, the teachings of this invention will suggest many other embodiments to those skilled in the art.

To perform the synchronous dubbing by using one remote control transmitter, it is sufficient to store, in the remote control transmitter 20, two operation codes (at least the play code, still code, record code and pause code) for two VTRs whose operation modes are different. For instance, when the above described operation codes for two existing VTRs are stored, the remote controller 20 enables synchronous dubbing to be carried out by using two VTRs without any special dubbing facilities under the remote control. Such dubbing is especially facilitated when two VTRs are products of the same manufacturer. In addition, it is advantageous to sell one VTR together with a remote control transmitter as a set. For instance, it is conceivable to use an existing play-only VTR as a VTR 10 and to use a playing/recording VTR, which is superior to the play-only VTR, as a VTR 12 together with the remote control transmitter 20. It is also feasible that a VTR to be sold together with the remote control transmitter 20 functions as a playing VTR at the time of dubbing, i.e., to sell the remote control transmitter 20 together with the VTR 10 as a set.

Two VTRs may be products of one manufacturer or those of different manufacturers. The point is that the operation codes which are specific to the two VTRs should be stored in the remote control transmitter 20. When the operation codes of the VTR of a certain manufacturer are known beforehand, it is enough to store the operation codes in association with the dubbing set button 40, the dubbing start button 42, and the dubbing stop button 44. To perform the synchronous dubbing by using VTRs of different manufacturers, the operation codes of the respective VTRs should be stored so as to be selectable according to the operation of the above-mentioned buttons.

When a remote control transmitter is of a type which can read operation codes of VTRs of different manufacturers and read a dubbing procedure under the users' control, the synchronous dubbing can be carried out by using any kinds of VTRs under the user's control.

## Claims

1. A video tape recording system with dubbing function comprising:
a) a first video tape recorder (10) being remotely controllable by a wave modulated signal at least in a playing mode,
b) a second video tape recorder (12) being remotely controllable by a wave modulated signal at least in a recording mode,
c) and transmitter (20) for transmitting wave modulated signals respectively controlling the operation of the first and the second video tape recorder whereby the transmitted operation codes of the first video tape recorder differ from those of the second video tape recorder
**characterized by**,
the transmitter (20) comprising a dubbing set button (40) for sequentially transmitting a play code and a still code specific to the first video tape recorder (10) and a record code and pause code specific to the second video tape recorder (12) and for setting both the video tape recorders in a stand-by mode and a dubbing start button (42) for sequentially transmitting a play code specific to said first video tape recorder (10) and a record code specific to said second video tape recorder (12).

2. A video tape recording system according to claim 1, wherein said remote control transmitter (20) includes a dubbing stop button (44) for sequentially transmitting stop codes specific to said first video tape recorder (10) and said second video tape recorder (12), respectively.

3. A video tape recording system according to claim 1, wherein said dubbing set button (40) of said remote control transmitter (20) sets said second video tape recorder (12) and said first video tape recorder (10) to a pause mode and a still mode, respectively according to said pause code and said still code out of the four operation codes when said dubbing set button (40) is operated after said video tape recorders (10,12) are set in the recording and playing modes, respectively.

4. A video tape recording system according to anyone of the claims 1 to 3 further comprising a selector (46) for alternately selecting one of the video tape recorders as receiver of transmitted operation codes.

5. A dubbing remote control transmitter for transmitting wave modulated signals for use in a video tape recording system according to anyone of the claims 1 to 4, comprising at least:
a) a dubbing set button (40) for sequentially transmitting a play code and a still code specific to a first video tape recorder (10) and for sequentially transmitting a recording code and a pause code specific to a second video tape recorder (12) and
b) a dubbing start button (42) for sequentially transmitting a play code specific to said first video tape recorder (10) and a record code specific to said second video tape recorder (12), whereby the transmitted operating codes being specific to the first video tape recorder are different from those for the second video tape recorder.

6. A dubbing remote control transmitter (20) according to claim 5,
further comprising, a dubbing stop button (44) is provided for sequentially transmitting discrete stop codes to the first video tape recorder (10) and the second video tape recorder (12), respectively.

7. A dubbing remote control transmitter (20) according to claim 5,
wherein said dubbing set button (40) sets said first and second video tape recorders (10,12) to a pause mode and a still mode, respectively according to said pause code and still code out of the four operation codes when said dubbing set button (40) is operated after said video tape recorders (10, 12) are set in the recording and playing modes, respectively.

8. A dubbing remote control transmitter (20) according to anyone of the claims 5 to 7, further comprising:
a) various dubbing/editing buttons (22,24,26,28,30, 32) for outputting operation codes so as to inde- . pendently operate said first video tape recorder (10) and said second video tape recorder (12), and
b) a selector (46) for alternately selecting one of the video tape recorders as receiver of transmitted operation codes.

## Patentansprüche

1. Videoband-Aufzeichnungssystem mit Überspielfunktion mit
a) einem ersten Videoband-Recorder (10), der durch ein wellenmoduliertes Signal mindestens in einem Wiedergabemodus fernsteuerbar ist,
b) einem zweiten Videoband-Recorder (12), der durch ein wellenmoduliertes Signal mindestens in einem Aufnahmemodus fernsteuerbar ist und mit
c) einem Transmitter (20) zum Übermitteln wellenmodulierter Signale, die jeweils den Betrieb des ersten bzw. des zweiten Videoband-Recorders steuern, wobei die übermittelten Betriebscodes des ersten Videoband-Recorders sich von denen des zweiten Videoband-Recorders unterscheiden,
dadurch **gekennzeichnet**, daß der Transmitter (20) einen Überspieleinstellknopf (40) zum aufeinanderfolgenden Übermitteln eines Wiedergabecodes und eines Standbildcodes, die spezifisch für den ersten Videoband-Recorder (10) sind, und eines Aufnahmecodes und eines Pausencodes, die spezifisch für den zweiten Videoband-Recorder (12) sind, und um beide Videoband-Recorder in einen Bereitschaftsmodus zu setzen,
und einen Überspielstartknopf (42) zum aufeinanderfolgenden Übermitteln eines Wiedergabecodes, der spezifisch für den ersten Videoband-Recorder (10) ist und eines Aufnahmecodes, der spezifisch für den zweiten Videoband-Recorder (12) ist, aufweist.

2. Videoband-Aufzeichnungssystem nach Anspruch 1, wobei der Transmitter (20) einen Überspielstopknopf (44) zum aufeinanderfolgenden Übermitteln von Stopcodes, die jeweils spezifisch für den ersten Videoband-Recorder (10) bzw. für den zweiten Videoband-Recorder (12) sind, aufweist.

3. Videoband-Aufzeichnungssystem nach Anspruch 1, wobei der Überspieleinstellknopf (40) des Transmitters (20) den zweiten Videoband-Recorder (12) und den ersten Videoband-Recorder (10) in einen Pausenmodus und einen Standbildmodus setzt gemäß dem Pausencode bzw. dem Standbildcode aus den vier Betriebscodes, wenn der Überspieleinstellknopf (40) betätigt wird, nachdem die Videoband-Recorder (10, 12) in den Aufnahme- bzw. in den Wiedergabemodus gesetzt wurden.

4. Videoband-Aufzeichnungssystem nach einem der Ansprüche 1 bis 3, das weiterhin einen Wahlschalter (46) zur alternativen Auswahl eines der Videoband-Recorder als Empfänger der übermittelten Betriebscodes aufweist.

5. Fernsteuer-Transmitter zum Überspielen für die Übermittlung von wellenmodulierten Signalen zur Verwendung in einem Videoband-Aufzeichnungssystem nach einem der Ansprüche 1 bis 4 mit mindestens
a) einem Überspieleinstellknopf (40) zum aufeinanderfolgenden Übermitteln eines Wiedergabecodes und eines Standbildcodes, die spezifisch für einen ersten Videoband-Recorder (10) sind, und zum aufeinanderfolgenden Übermitteln eines Aufnahmecodes und eines Pausencodes, die spezifisch für einen zweiten Videoband-Recorder (12) sind, und
b) einem Überspielstartknopf (42) zum aufeinanderfolgenden Übermitteln eines Wiedergabecodes, der spezifisch für den ersten Videoband-Recorder (10) ist, und eines Aufnahmecodes, der spezifisch für den zweiten Videoband-Recorder (12) ist, wobei die übermittelten Betriebscodes, die für den ersten Videoband-Recorder spezifisch sind, sich von denen für den zweiten Videoband-Recorder unterscheiden.

6. Fernsteuer-Transmitter zum Überspielen (20) nach Anspruch 5, mit einem Überspielstopknopf (44) zum aufeinanderfolgenden Übermitteln von diskreten Stopcodes an den ersten Videoband-Recorder (10) und an den zweiten Videoband-Recorder (12).

7. Fernsteuer-Transmitter zum Überspielen (20) nach Anspruch 5, wobei der Überspieleinstellknopf (40) den ersten und den zweiten Videoband-Recorder (10, 12) in einen Pausenmodus und einen Standbildmodus setzt gemäß dem Pausencode bzw. dem Standbildcode aus den vier Betriebscodes, wenn der Überspieleinstellknopf (40) betätigt wird, nachdem die Videoband-Recorder (10, 12) in den Aufnahme- bzw. in den Wiedergabemodus gesetzt wurden.

8. Fernsteuer-Transmitter zum Überspielen (20) nach einem der Ansprüche 5 bis 7, mit
a) verschiedenen Überspiel-/Aufbereitungsknöpfen (22, 24, 26, 28, 30, 32) zur Ausgabe von Betriebscodes zum unabhängigen Betrieb des ersten Videoband-Recorders (10) und des zweiten Videoband-Recorders (12) und mit
b) einem Wahlschalter (46) zum alternativen Auswählen eines der Videoband-Recorder als Empfänger der übermittelten Betriebscodes.

## Revendications

1. Installation d'enregistrement de bande vidéo avec fonction de copie, qui comprend :
a) un premier enregistreur (10) de bande vidéo, commandable à distance par un signal à modulation d'onde, en mode lecture au moins,
b) un second enregistreur (12) de bande vidéo, commandable à distance par un signal à modulation d'onde, en mode enregistrement au moins, et
c) un transmetteur (20) destiné à envoyer des signaux à modulation d'onde qui commandent respectivement le fonctionnement des premier et second enregistreurs de bande vidéo, grâce à quoi les codes de fonctionnement transmis du premier enregistreur de bande vidéo diffèrent de ceux du second enregistreur de bande vidéo, caractérisée par le fait que le transmetteur (20) comprend une touche (40) de mise en position de copie destinée à envoyer de façon séquentielle un code de lecture et un code d'arrêt sur image propres au premier enregistreur (10) de bande vidéo ainsi qu'un code d'enregistrement et un code de pause propres au second enregistreur (12) de bande vidéo et destinée à placer les deux enregistreurs de bande vidéo en mode d'attente, et une touche (42) de démarrage de la copie destinée à envoyer de façon séquentielle un code de lecture propre audit premier enregistreur (10) de bande vidéo et un code d'enregistrement propre audit second enregistreur (12) de bande vidéo.

2. Installation d'enregistrement de bande vidéo selon la revendication 1, dans laquelle ledit transmetteur (20) de commande à distance comporte une touche (44) d'arrêt de la copie destinée à envoyer de façon séquentielle des codes d'arrêt propres respectivement audit premier enregistreur (10) de bande vidéo et audit second enregistreur (12) de bande vidéo.

3. Installation d'enregistrement de bande vidéo selon la revendication 1. dans laquelle ladite touche (40) de mise en position de copie dudit transmetteur (20) de commande à distance place respectivement ledit second enregistreur (12) de bande vidéo et ledit premier enregistreur (10) de bande vidéo en mode pause et en mode arrêt sur image, en conformité avec ledit code de pause et ledit code d'arrêt sur image parmi les quatre codes de fonctionnement quand ladite touche (40) de mise en position de copie est actionnée après que lesdits enregistreurs (10, 12) de bande vidéo ont été respectivement placés en mode enregistrement et en mode lecture.

4. Installation d'enregistrement de bande vidéo selon l'une quelconque des revendications 1 à 3, comprenant en outre un sélecteur (46) pour choisir alternativement l'un des enregistreurs de bande vidéo comme récepteur des codes de fonctionnement envoyés.

5. Transmetteur de commande à distance de la copie destiné à envoyer des signaux à modulation d'onde à utiliser dans une installation d'enregistrement de bande vidéo conforme à l'une quelconque des revendications 1 à 4, comprenant au moins :
a) une touche (40) de mise en position de copie pour envoyer de façon séquentielle un code de lecture et un code d'arrêt sur image propres à un premier enregistreur (10) de bande vidéo et pour envoyer de façon séquentielle un code d'enregistrement et un code de pause propres à un second enregistreur (12) de bande vidéo, et
b) une touche (42) de démarrage de la copie pour envoyer de façon séquentielle un code de lecture propre audit premier enregistreur (10) de bande vidéo et un code d'enregistrement propre audit second enregistreur (12) de bande vidéo, grâce à quoi les codes de fonctionnement transmis propres au premier enregistreur de bande vidéo diffèrent de ceux destinés au second enregistreur de bande vidéo.

6. Transmetteur (20) de commande à distance de la copie selon la revendication 5, comprenant en outre une touche (44) d'arrêt de la copie pour envoyer respectivement de façon séquentielle des codes d'arrêt distincts au premier enregistreur (10) de bande vidéo et au second enregistreur (12) de bande vidéo.

7. Transmetteur (20) de commande à distance de la copie selon la revendication 5, dans lequel ladite touche (40) de mise en position de copie place respectivement lesdits premier et second enregistreurs (10, 12) de bande vidéo en mode pause et en mode arrêt sur image, en conformité avec ledit code de pause et ledit code d'arrêt sur image parmi les quatre codes de fonctionnement quand ladite touche (40) de mise en position de copie est actionnée après que lesdits enregistreurs (10, 12) de bande vidéo ont été respectivement placés en mode enregistrement et en mode lecture.

8. Transmetteur (20) de commande à distance de la copie selon l'une quelconque des revendications 5 à 7, comprenant en outre :
a) diverses touches (22, 24, 26, 28, 30, 32) de copie/éditer destinées à émettre des codes de fonctionnement de manière à actionner indépendamment ledit premier enregistreur (10) de bande vidéo et ledit second enregistreur (12) de bande vidéo, et
b) un sélecteur (46) pour choisir alternativement l'un desdits enregistreurs de bande vidéo comme récepteur des codes de fonctionnement envoyés.
